# EUROPÄISCHE PATENTSCHRIFT

(11) **EP 1 362 400 B1**
(45) Veröffentlichungstag und Bekanntmachung des Hinweises auf die Patenterteilung: **06.06.2007**
(21) Anmeldenummer: 01990567.8
(22) Anmeldetag: 14.12.2001
(51) Int. Cl.: H02G 3/22, H02G 3/06, G01N 27/407

(54) **KABELDURCHFÜHRUNG**
CABLE DUCT
TRAVERSEE POUR CABLE

(30) Priorität: 06.02.2001 DE 10105544
(43) Veröffentlichungstag der Anmeldung: 19.11.2003
(60) Teilanmeldung: 06017137.8
(73) Patentinhaber: Endress + Hauser GmbH + Co. KG, 79689 Maulburg (DE)
(72) Erfinder: ALZNAUER, Miroslaw, 79697 Wies (DE); GUTMANN, Frank, 79112 Freiburg (DE)
(74) Vertreter: Andres, Angelika Maria
(86) Internationale Anmeldenummer: PCT/EP2001/014789
(87) Internationale Veröffentlichungsnummer: WO 2002/063735

(56) Entgegenhaltungen:
- US-A- 4 668 477
- US-A- 4 719 359
- US-A- 6 150 607

## Beschreibung

Die Erfindung betrifft eine Kabeldurchführung für eine Meßsonde.

Meßsonden, z.B. Druckmeßsonden, werden häufig eingesetzt, indem sie z.B. an einem Kabel in einen Behälter eingebracht werden. Das Kabel dient dabei dem elektrischen Anschluß der Meßsonde und deren mechanischer Befestigung. Besonders geeignet sind hierfür Kabel, die außen eine z.B. von einem Kunststoff umgebene metallische Abschirmung aufweisen. Versorgungs- und/oder Signalleitungen können dann im Inneren der Abschirmung von äußeren Einflüssen geschützt zur Sonde führen.

Das Kabel führt von der Sonde aus dem Behälter heraus zu einer übergeordneten Einheit, z.B. einer Energieversorgung und/oder einer weiterführenden Elektronik.

Eine Anwendung ist die Füllstandsmessung mittels einer Druckmeßsonde. Dabei wird die Druckmeßsonde an dem Kabel in einen mit einem Füllgut gefüllten Behälter eingeführt. Der von der Druckmeßsonde ermittelte Druck entspricht der Höhe der Füllgutsäule oberhalb der Druckmeßsonde und ist daher ein Maß für den Füllstand in dem Behälter.

Bei diesen Anwendungen ist zur Abdichtung, z.B. damit kein Füllgut austritt oder in eine nachfolgende Elektronik und/oder übergeordnete Einheit eindringt, eine Kabeldurchführung erforderlich, die ein Gehäuse aufweist, durch das das Kabel hindurch geführt wird. Das Gehäuse kann dabei Bestandteil der übergeordneten Einheit sein, und/oder auch Teil einer Befestigungsvorrichtung für die Sonde sein, indem das Gehäuse z.B. mittels eines Flansches oder eines Gewindes am Meßort, z.B. auf einem Behälter, montiert ist.

Genauso kann die Kabeldurchführung an der Sonde aneordnet sein und z.B. mit der Sonde bzw. einem Sondengehäuse verbunden sein und sicherstellen, daß kein Füllgut in die Sonde eindringt.

Aus der Druckschrift US-A-6 150 607 ist ein Kabelverbinder für mindestens ein Kabel beschrieben, der an sich eine dichte Anordnung darstellt. Da das oder die Kabel in einem Gehäuse enden und nicht hindurchgeführt werden, ist ein dort beschriebenes Befestigungselement und ein dort beschriebenes Dichtelement für eine Kabeldurchführung für eine Meßsonde für die oben beschriebenen Anwendungen nicht verwendbar. Bei den genannten Meßsonden sind an die Kabel-Befestigung bedeutend höhere Anforderungen zu stellen als sonst an einen Kabelverbinder nach der US-A-6 150 607.

In der Druckschrift US-A-4 719 359 wird ein an einem Kabel befestigter Trübungssensor in einem Gehäuse beschrieben, das zu einem in einem Behälter befindlichen flüssigen Medium hin offen ist. Die Befestigung des Kabels im Gehäuse erfolgt durch relativ kurze, konische, elastische Stopfen, die gleichzeitig eine Dichtfunktion ausüben. Auch die in der US-A-4 719 359 beschriebene Kabel-Befestigung reicht jedoch für die höheren Anforderungen, die an eine Meßsonde für die oben beschriebenen Anwendungen gestellt werden, nicht aus.

Es ist eine Aufgabe der Erfindung eine Kabeldurchführung für eine Sonde anzugeben, die möglichst klein, einfach und kostengünstig ist.

Hierzu besteht die Erfindung in einer Kabeldurchführung für eine Sonde mit
- einem Kabel,
- einem Gehäuse,
   -- durch das das Kabel hindurch geführt ist, und
   -- das an einem ersten Ende einen sich radial nach innen erstreckenden Absatz aufweist,
- einer ersten Hülse,
   -- die das Kabel umgreift, und
   -- die einen ersten innerhalb des Gehäuses (1) angeordneten Abschnitt aufweist,
   -- wobei die ersten Hülse durch den Absatz im Gehäuse.gehalten wird,
   -- wobei die erste Hülse abdichtend an dem Kabel anliegt und
   -- wobei zwischen dem Absatz des Gehäuses (1) und der ersten Hülse eine Abdichtung vorliegt,
- einer zweiten Hülse,
   -- die im Inneren des Gehäuses angeordnet ist,
   -- die einen ersten zylindrischen Abschnitt (19) aufweist, der das Kabel eng umgreift,
   -- die einen an ein absatz-zugewandtes Ende des ersten Abschnitts angrenzenden zweiten Abschnitt aufweist,
      --- der auf dem ersten Abschnitt der ersten Hülse aufliegt, und
- einem Befestigungselement,
   -- das ein in absatz-zugewandter Richtung in das Gehäuse eingeschraubter Gewindering ist
   -- und durch das die zweite Hülse gegen die erste Hülse gepreßt ist.

Gemäß einer Ausgestaltung weist der Absatz des Gehäuses eine konische innere Mantelfläche auf, deren Durchmesser in Richtung des ersten Endes des Gehäuses abnimmt, die erste Hülse besteht aus einem Elastomer, der erste Abschnitt der ersten Hülse weist einen konischen Bereich auf, und die erste Hülse ist durch das Befestigungselement derart gegen den Absatz des Gehäuses gepreßt, daß der konische Bereich der ersten Hülse gegen die konische Mantelfläche des Gehäuses preßt und die erste Hülse abdichtend an dem Gehäuse und dem Kabel anliegt.

Gemäß einer Weiterbildung ist durch das Befestigungselement eine Feder eingespannt, die auf die erste Hülse eine Kraft in absatz-zugewandter Richtung ausübt.

Gemäß einer Ausgestaltung der Weiterbildung liegt die Feder auf einer auf der ersten Hülse aufliegenden Scheibe auf.

Gemäß einer Weiterbildung ist die zweite Hülse metallisch und zur Zugentlastung des Kabels mit dem Kabel verpreßt.

Gemäß einer Weiterbildung ist das Kabel außen von einer metallischen Abschirmung umgeben, die zweite Hülse ist metallisch, und die zweite Hülse bildet eine elektrisch leitende Verbindung zwischen dem Gehäuse und der metallischen Abschirmung.

Gemäß einer Ausgestaltung besteht die erste Hülse aus einem Kunststoff, das Kabel weist einen Überzug aus einem Kunststoff auf, und die erste Hülse ist mit dem Überzug verschweißt.

Gemäß einer ersten Ausgestaltung ist der Absatz des Gehäuses eine sich radial nach innen erstreckende Schulter, und die Abdichtung eine auf der Schulter aufliegende Dichtung, die zwischen der Schulter und dem ersten Abschnitt der ersten Hülse eingespannt ist.

Gemäß einer zweiten Ausgestaltung ist der Absatz des Gehäuses eine sich radial nach innen erstreckende Schulter, und die Abdichtung erfolgt durch eine Innenkante der Schulter auf die der erste Abschnitt der ersten Hülse durch das Befestigungselement gepreßt ist.

Ein Vorteil der Erfindung besteht darin, daß die Kabeldurchführung sehr wenige und in ihren Abmessungen kleine Bauteile aufweist.

Ein weiterer Vorteil besteht darin, daß bei der erfindungsgemäßen Kabeldurchführung nicht nur eine Zugentlastung für das Kabel besteht, sondern gleichzeitig auch die Abschirmung über das Gehäuse an Masse oder an ein Bezugspotential angeschlossen ist.

Die Erfindung und deren Vorteile werden nun anhand der Figuren der Zeichnung, in denen vier Ausführungsbeispiele dargestellt sind, näher erläutert; gleiche Elemente sind in den Figuren mit denselben Bezugszeichen versehen.
- Fig. 1 zeigt: eine schematische Darstellung einer Kabeldurchführung mit einer mit einem Kabel verschweißten ersten Hülse, bei dem zwischen dem Gehäuse und der ersten Hülse eine Dichtung angeordnet ist;
- Fig. 2 zeigt: eine schematische Darstellung einer Kabeldurchführung mit einer mit einem Kabel verschweißten ersten Hülse, bei dem die Hülse abdichtend auf einer Innenkante des Gehäuses anliegt;
- Fig. 3 zeigt: eine schematische Darstellung einer Kabeldurchführung mit ersten Hülse aus einem Elastomer, die abdichtend an dem Kabel und an dem Gehäuse anliegt; und
- Fig. 4 zeigt: eine schematische Darstellung einer Kabeldurchführung, bei der das Gehäuse zwei miteinander verschraubte Teile aufweist.

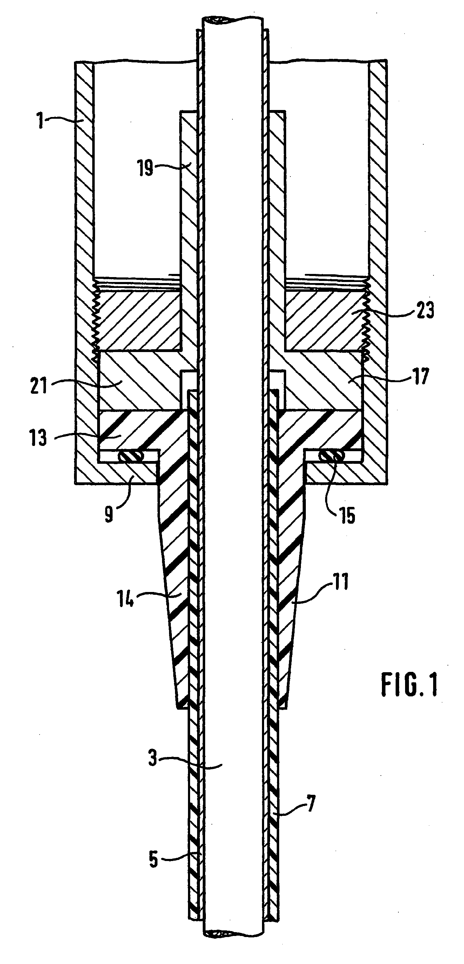

Fig. 1 zeigt eine schematische Darstellung einer erfindungsgemäßen Kabeldurchführung für eine Sonde. Sie weist ein im wesentlichen zylindrisches Gehäuse 1 auf, durch das ein Kabel 3 hindurch geführt ist.

Das Kabel 3 dient zur mechanischen Befestigung und zum elektrischen Anschluß einer in Fig. 1 nicht dargestellten Sonde, z.B. einer Druckmeßsonde. Im Inneren des Kabels 3 verlaufen in Fig. 1 nicht dargestellte Leitungen über die der elektrische Anschluß erfolgt. Die Leitungen sind von einer metallischen Abschirmung 5, z.B. einem Drahtgeflecht, umgeben. Die Abschirmung 5 ist mit einem Außenmantel 7 aus einem Kunststoff, z.B. aus Polyethylen (PE), überzogen.

Das Gehäuse 1 weist an einem ersten Ende einen sich radial nach innen erstreckenden Absatz auf. Bei dem in Fig. 1 dargestellten Ausführungsbeispiel ist der Absatz eine sich radial nach innen erstreckende Schulter 9.

Es ist eine erste Hülse 11 vorgesehen, die das Kabel 3 umgreift. Die Hülse 11 besteht aus einem Kunststoff. Vorzugsweise besteht sie aus dem gleichen Kunststoff wie der Außenmantel 7 des Kabels 3, also z.B. aus Polyethylen (PE).

Die Hülse 11 weist einen ersten innerhalb des Gehäuses 1 angeordneten Abschnitt 13 und einen zweiten außerhalb des Gehäuses angeordneten Abschnitt 14 auf.

Die erste Hülse 11 liegt abdichtend an dem Kabel 3 an. Bei dem in Fig. 1 dargestellten Ausführungsbeispiel ist dies dadurch gegeben, daß die Hülse 11 mit dem Außenmantel 7 des Kabels 3 verschweißt ist.

Weiter liegt zwischen dem Absatz des Gehäuses 1 und der ersten Hülse 11 eine Abdichtung vor. Diese Abdichtung ist bei dem in Fig. 1 dargestellten Ausführungsbeispiel eine auf der Schulter 9 des Gehäuses 1 aufliegende Dichtung 15, z.B. ein O-Ring, die zwischen der Schulter 9 und dem ersten Abschnitt 13 der ersten Hülse 11 eingespannt ist.

Auf einer absatz-abgewandten Seite der ersten Hülse 11 ist im Inneren des Gehäuses 1 eine zweite Hülse 17 angeordnet. Die zweite Hülse 17 besteht aus einem Metall, z:B. einem Edelstahl. Sie weist einen ersten zylindrischen Abschnitt 19 auf, der das Kabel 3 eng umgreift. Weiter weist sie einen an ein absatz-zugewandtes Ende des ersten Abschnitts 19 angrenzenden zweiten Abschnitt 21 auf, der auf dem ersten Abschnitt 13 der ersten Hülse 11 aufliegt.

Der Außenmantel 7 des Kabels 3 ist auf einer absatz-abgewandten Seite der ersten Hülse 11 entfernt und die zweite Hülse 17 ist auf die freigelegte metallische Abschirmung 5 aufgeschoben. Die zweite Hülse 17 ist zur Zugentlastung des Kabels 3 mit dem Kabel 3 verpreßt.

Vorzugsweise bildet die zweite Hülse 17 eine elektrisch leitende Verbindung zwischen dem Gehäuse 1 und der metallischen Abschirmung 5. Hierzu ist der zweite Abschnitt 21 der zweiten Hülse 17 so geformt, daß er das Gehäuse 1 berührt und hierdurch eine elektrisch leitende Verbindung herstellt. Bei dem in Fig. 1 dargestellten Ausführungsbeispiel weist der zweite Abschnitt 21 der zweiten Hülse 17 einen Außendurchmesser auf, der gleich einem Innendurchmesses des Gehäuses 1 ist. Die leitende Verbindung zu dem Kabel 3 ist durch das Verpressen der metallischen zweiten Hülse 17 auf der metallischen Abschirmung 5 gegeben. Durch diese elektrische Verbindung ist gewährleistet, daß die metallische Abschirmung 5 zum Schutz der darin verlaufenden Leitungen vor eletromagnetischen Störungen auf dem gleichen Potential liegt wie das Gehäuse 1. Dies kann z.B. Masse oder ein festes Bezugspotential sein.

In dem Gehäuse 1 ist ein Befestigungselement vorgesehen, durch das die zweite Hülse 17 gegen die erste Hülse 11 gepreßt ist. In dem in Fig. 1 dargestellten Ausführungsbeispiel ist das Befestigungselement ein Gewindering 23, der in das Gehäuse 1 in absatz-zugewandter Richtung eingeschraubt ist. Der Gewindering 23 umgreift den ersten Abschnitt 19 der zweiten Hülse 17 und liegt mit einer ringscheibenförmigen Stirnfläche auf dem zweiten Abschnitt 21 der zweiten Hülse 17 auf. Durch den Gewindering 23 ist die zweite Hülse 17 gegen die erste Hülse 13 gepreßt. Hierdurch wird die erste Hülse 13 wiederum gegen die Schulter 9 des Gehäuses 1 gepreßt und bewirkt so eine Einspannung der Dichtung 15 derart, daß diese deren Dichtwirkung entfaltet.

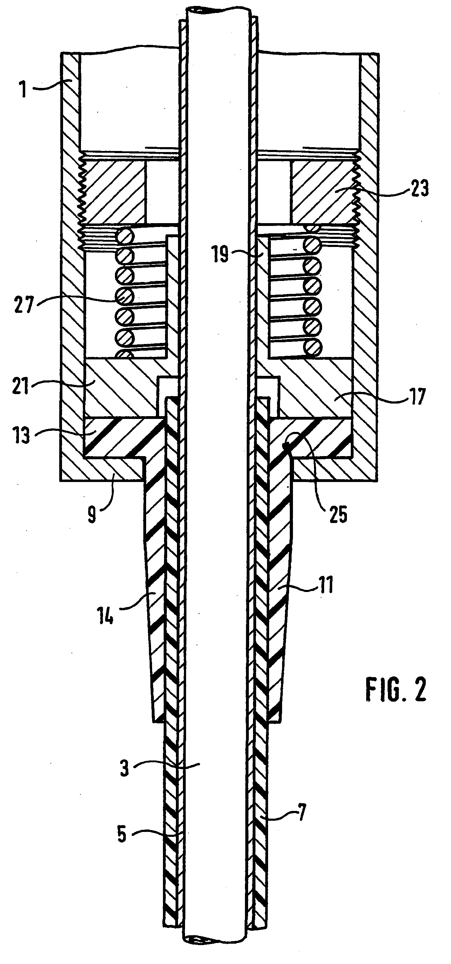

Fig. 2 zeigt ein weiteres Ausführungsbeispiel einer erfindungsgemäßen Kabeldurchführung. Aufgrund der großen Übereinstimmung mit dem zuvor beschriebenen Ausführungsbeispiel werden nachfolgend lediglich die bestehenden Unterschiede näher erläutert.

Der Absatz des Gehäuses 1 ist auch in dem in Fig. 2 dargestellten Ausführungsbeispiel eine sich radial nach innen erstreckende Schulter 9. Die Abdichtung zwischen dem Gehäuse 1 und der ersten Hülse 11 erfolgt jedoch nicht durch eine zwischen der Schulter 9 und dem ersten Abschnitt 13 der ersten Hülse 11 eingespannte Dichtung, sondern durch eine Innenkante 25 der Schulter 9 auf die der erste Abschnitt 13 der ersten Hülse 11 durch den Gewindering 23 gepreßt ist.

Vorzugsweise ist durch das Befestigungselement eine Feder 27 eingespannt, die auf die erste Hülse 17 eine Kraft in absatz-zugewandter Richtung ausübt. In den in Fig. 2 dargestellten Ausführungsbeispiel ist die Feder 27 zwischen dem Gewindering 23 und der zweiten Hülse 17 eingespannt. Die Feder 27 bewirkt, daß eine durch den Gewindering 23 auf die erste Hülse 11 einwirkende Kraft, die für die Abdichtung erforderlich ist auch dann relativ konstant und ausreichend groß ist, wenn die Kabeldurchführung großen Temperaturschankungen ausgesetzt ist, die zu unterschiedlichen thermischen Ausdehnungen der einzelnen Bauelemente der Kabeldurchführung führen.

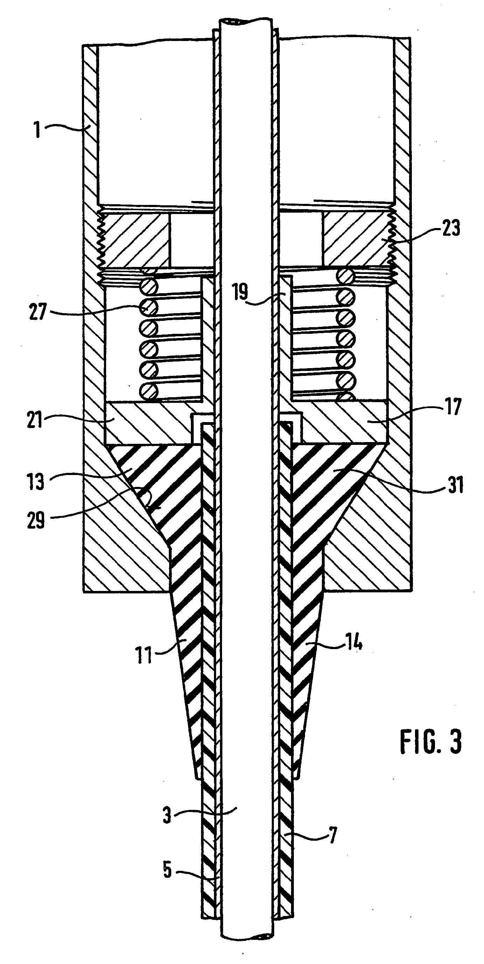

Fig. 3 zeigt ein weiteres Ausführungsbeispiel einer erfindungsgemäßen Kabeldurchführung. Aufgrund der großen Übereinstimmung mit den zuvor beschriebenen Ausführungsbeispielen werden auch hier nachfolgend lediglich die bestehenden Unterschiede näher erläutert.

Bei dem in Fig. 3 dargestellten Ausführungsbeispiel weist der Absatz des Gehäuses 1 eine konische innere Mantelfläche 29 auf, deren Durchmesser in Richtung des ersten Endes des Gehäuses 1 abnimmt. Die erste Hülse 11 besteht aus einem Elastomer, z.B. aus einem Gummi, und der erste Abschnitt 13 der ersten Hülse 11 weist einen zu der konischen inneren Mantelfläche 29 des Gehäuses 1 formgleichen konischen Bereich 31 auf. Die erste Hülse 11 ist durch den Gewindering 23 derart gegen den Absatz des Gehäuses 1 gepreßt, daß der konische Bereich 31 der Hülse 11 in die konische Mantelfläche 29 des Gehäuses 1 hinein gedrückt wird und die erste Hülse 11 abdichtend an dem Gehäuse 1 und an dem Kabel 3 anliegt.

Auch hier ist zwischen dem Gewindering 23 und der zweiten Hülse 17 eine Feder 27 vorgesehen, die dafür sorgt, daß auch bei unterschiedlicher thermischer Ausdehnung der einzelnen Bauelemente der Kabeldurchführung immer eine ausreichende Kraft in absatz-zugewandter Richtung auf die erste Hülse 11 ausgeübt wird, um die Abdichtungen zwischen der Hülse 11 und dem Kabel 3 und zwischen der Hülse 11 und dem Gehäuse 1 zu gewährleisten.

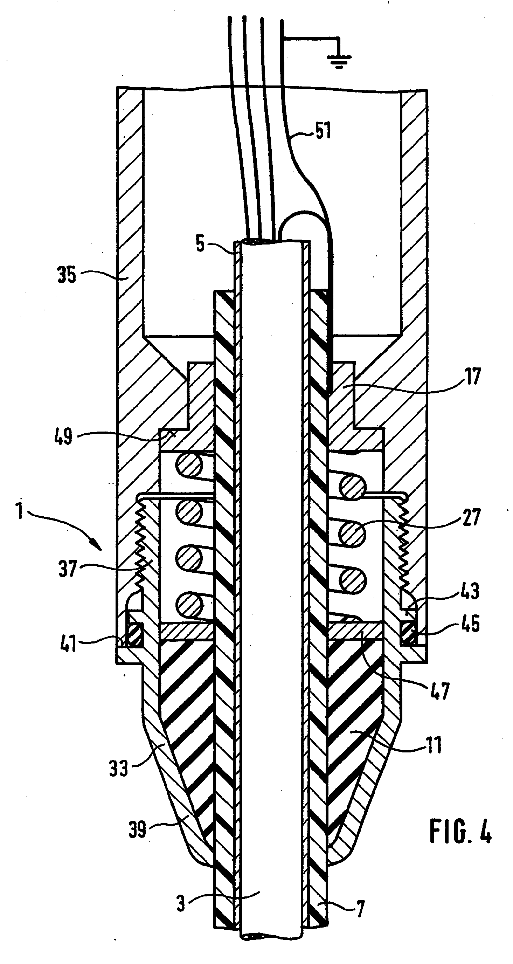

Fig. 4 zeigt ein weiteres Ausführungsbeispiel einer erfindungsgemäßen Kabeldurchführung. Aufgrund der großen Übereinstimmung mit dem zuvor beschriebenen Ausführungsbeispiel werden auch hier nachfolgend lediglich die bestehenden Unterschiede näher erläutert.

Bei dem in Fig. 4 dargestellten Ausführungsbeispiel weist das Gehäuse 1 ein erstes das erste Ende umfassendes Teil 33 und ein zweites Teil 35 auf. Das erste Teil 33 weist einen zylindrischen Abschnitt 37 und einen daran anschließenden sich in Richtung des ersten Endes des Gehäuses 1 auf den Außendurchmessers des Kabels 3 verjüngenden konischen Abschnitt 39 auf. Der konische Abschnitt 39 bildet den Absatz des Gehäuses 1, durch den die erste Hülse 11 im Inneren des Gehäuses 1 gehalten wird. Die erste Hülse 11 ist vollständig innerhalb des konischen Abschnitts 39 angeordnet. Sie besteht auch hier aus einem Elastomer, z.B. aus Gummi, und liegt abdichtend an dem Gehäuse 1 und dem Kabel 3 an. Hierzu umgreift die erste Hülse 11 das Kabel 3 eng und weist einen außen zylindrischen absatz-abgewandten Bereich und einen absatz-zugewandten außen konischen sich in absatz-zugewandter Richtung auf den Außendurchmesser des Kabels 3 verjüngenden Bereich auf.

Das zweite Teil 35 des Gehäuses 1 ist in absatz-zugewandter Richtung auf das erste Teil 33 aufgeschraubt. Hierzu ist auf dem zylindrischen Abschnitt 37 ein Außengewinde vorgesehen. In absatz-zugewandter Richtung unterhalb des Außengewindes ist ein sich radial nach außen erstreckender Anschlag 41 vorgesehen gegen den das zweite Teil 35 geschraubt ist.

In absatz-abgewandter Richtung oberhalb des Anschlags 41 ist eine sich innerhalb des zweiten Teils 35 radial nach außen erstreckende Schulter 43 vorgesehen, die zusammen mit dem Anschlag 41 eine Nut zur Aufnahme einer Dichtung 45 bildet. Die Dichtung 45 sorgt für eine Abdichtung eines zwischen den beiden Gehäuseteilen bestehenden ringzylindrischen Spaltes.

Im Inneren des Gehäuses 1 ist zwischen der ersten und der zweiten Hülse 11, 17 eine Feder 27 angeordnet. Die Feder 27 liegt auf einer auf der ersten Hülse 11 aufliegenden Scheibe 47 auf. Die Scheibe 47 bietet den Vorteil, daß eine von der eingespannten Feder 27 ausgeübte Kraft in absatz-zugewandter Richtung gleichmäßig auf die Hülse 11 übertragen wird.

Die zur Einspannung der Feder 27 erforderliche Kraft wird durch das Befestigungselement aufgebracht. Bei dem in Fig. 4 dargestellten Ausführungsbeispiel ist das Befestigungselement ein sich radial nach innen erstreckender im Inneren des zweiten Teils 35 angeordneter Absatz 49, der auf der zweiten Hülse 17 aufliegt. Durch das Aufschrauben des zweiten Teils 35 auf den ersten Teil 33 preßt der Absatz 49 die zweite Hülse 17 in absatz-zugewandter Richtung.

Bei dem in Fig. 4 dargestellten Ausführungsbeispiel ist die metallische Abschirmung 5 kein stabiles metallisches Drahtgeflecht sondern eine dünne metallische Folie. Die zweite Hülse 17 ist außen auf den Außenmantel 7 des Kabels 3 aufgeschoben und mit dem Kabel 3 verpreßt. Auf einer absatz-abgewandten Seite der zweiten Hülse 17 ist der Außenmantel 7 entfernt und die Leitungen sind freigelegt. Eine mit der metallischen Folie elektrisch leitend verbundene Beilauflitze 51 weist ein blankes Leitungselement auf, das zwischen dem Außenmantel 7 des Kabels 3 und der zweiten Hülse 17 eingeklemmt ist. Es besteht somit, wie auch bei den zuvor beschriebenen Ausführungsbeispielen, durch die zweite Hülse 17 eine elektrisch leitende Verbindung zwischen dem Gehäuse 1 und der metallischen Abschirmung 5. Das Unterlegen einer Beilauflitze zwischen dem Außenmantel 7 und der zweiten Hülse 17 kann selbstverständlich auch bei den zuvor beschriebenen Ausführungsbeispielen zur Herstellung der gewünschten elektrischen Verbindung eingesetzt werden.

## Patentansprüche

1. Kabeldurchführung für eine Sonde mit
- einem Kabel (3),
- einem Gehäuse (1),
-- durch das das Kabel (3) hindurch geführt ist, und
-- das an einem ersten Ende einen sich radial nach innen erstreckenden Absatz aufweist,
- einer ersten Hülse (11),
-- die das Kabel (3) umgreift, und
-- die einen ersten innerhalb des Gehäuses (1) angeordneten Abschnitt (13) aufweist,
-- wobei die ersten Hülse (11) durch den Absatz im Gehäuse gehalten wird,
-- wobei die erste Hülse (11) abdichtend an dem Kabel (3) anliegt und
-- wobei zwischen dem Absatz des Gehäuses (1) und der ersten Hülse (11) eine Abdichtung vorliegt,
- einer zweiten Hülse (17),
-- die im Inneren des Gehäuses (1) angeordnet ist,
-- die einen ersten zylindrischen Abschnitt (19) aufweist, der das Kabel (3) eng umgreift,
-- die einen an ein absatz-zugewandtes Ende des ersten Abschnitts (19) angrenzenden zweiten Abschnitt (21) aufweist,
--- der auf dem ersten Abschnitt (13) der ersten Hülse (11) aufliegt, und
- einem Befestigungselement,
-- das ein in absatz-zugewandter Richtung in das Gehäuse (1) eingeschraubter Gewindering (23) ist
-- und durch das die zweite Hülse (17) gegen die erste Hülse (11) gepreßt ist.

2. Kabeldurchführung nach Anspruch 1, bei der
- der Absatz des Gehäuses (1) eine konische innere Mantelfläche (29) aufweist, deren Durchmesser in Richtung des ersten Endes des Gehäuses (1) abnimmt,
- die erste Hülse (11) aus einem Elastomer besteht,
- der erste Abschnitt (13) der ersten Hülse einen konischen Bereich (31) aufweist, und
- die erste Hülse (11) durch das Befestigungselement derart gegen den Absatz des Gehäuses (1) gepreßt ist, daß der konische Bereich (31) der ersten Hülse (11) gegen die konische Mantelfläche (29) des Gehäuses (1) preßt und die erste Hülse (11) abdichtend an dem Gehäuse (1) und dem Kabel (3) anliegt.

3. Kabeldurchführung nach Anspruch 3, bei der durch
das Befestigungselement eine Feder (27) eingespannt ist, die auf die erste Hülse (11) eine Kraft in absatz-zugewandter Richtung ausübt.

4. Kabeldurchführung nach Anspruch 3, bei der die Feder auf einer auf der ersten Hülse (11) aufliegenden Scheibe (47) aufliegt.

5. Kabeldurchführung nach Anspruch 1, bei der die zweite Hülse (17) metallisch ist und zur Zugentlastung des Kabels (3) mit dem Kabel (3) verpreßt ist.

6. Kabeldurchführung nach Anspruch 1, bei der
- das Kabel (3) außen von einer metallischen Abschirmung (5) umgeben ist,
- die zweite Hülse (17) metallisch ist, und
- die zweite Hülse (17) eine elektrisch leitende Verbindung zwischen dem Gehäuse (1) und der metallischen Abschirmung (5) bildet.

7. Kabeldurchführung nach Anspruch 1, bei der
- die erste Hülse (11) aus einem Kunststoff besteht,
- das Kabel (3) einen Überzug (7) aus einem Kunststoff aufweist, und
- die erste Hülse (11) mit dem Überzug (7) verschweißt ist.

8. Kabeldurchführung nach Anspruch 1, bei der
- der Absatz des Gehäuses (1) eine sich radial nach innen erstreckende Schulter (9) ist, und
- die Abdichtung eine auf der Schulter (9) aufliegende Dichtung (15) ist,
-- die zwischen der Schulter (9) und dem ersten Abschnitt (13) der ersten Hülse (11) eingespannt ist.

9. Kabeldurchführung nach Anspruch 1, bei der
- der Absatz des Gehäuses (1) eine sich radial nach innen erstreckende Schulter (9) ist, und
- die Abdichtung durch eine Innenkante (25) der Schulter (9) erfolgt auf die der erste Abschnitt (13) der ersten Hülse (11) durch das Befestigungselement gepreßt ist.

## Claims

1. Cable bushing for a probe having
- a cable (3),
- a housing (1),
-- through which the cable (3) is led, and
-- which has, at a first end, a step which extends radially inwards,
- a first sleeve (11),
-- which engages around the cable (3) and
-- which has a first section (13) arranged inside the housing (1),
-- the first sleeve (11) being held in the housing by the step,
-- the first sleeve (11) bearing against the cable (3) in a seal-forming fashion, and
-- a sealing means being provided between the step in the housing (1) and the first sleeve (11),
- a second sleeve (17),
-- which is arranged inside the housing (1),
-- which has a first cylindrical section (19) which engages closely around the cable (3),
-- which has a second section (21) which adjoins an end of the first section (19) which faces the step,
--- which bears on the first section (13) of the first sleeve (11), and
- an attachment element,
-- which is a threaded ring (23) which is screwed into the housing (1) in the direction facing the step
-- and by means of which the second sleeve (17) is pressed against.the first sleeve (11).

2. Cable bushing according to Claim 1, in which
- the step in the housing (1) has a conical inner lateral surface (29) whose diameter decreases in the direction of the first end of the housing (1),
- the first sleeve (11) is composed of an elastomer,
- the first section (13) of the first sleeve has a conical region (31), and
- the first sleeve (11) is pressed against the step in the housing (1) by the attachment element in such a way that the conical region (31) of the first sleeve (11) presses against the conical lateral surface (29) of the housing (1) and the first sleeve (11) bears in a seal-forming fashion against the housing (1) and the cable (3) .

3. Cable bushing according to Claim 3, in which a spring (27) is clamped in by means of the attachment element and exerts on the first sleeve (11) a force in the direction facing the step.

4. Cable bushing according to Claim 3, in which the spring bears on a disc (47) which bears on the first sleeve (11).

5. Cable bushing according to Claim 1, in which the second sleeve (17) is metallic and is pressed with the cable (3) in order to provide strain relief to the cable (3).

6. Cable bushing according to Claim 1, in which
- the cable (3) is surrounded on the outside by a metallic shield (5),
- the second sleeve (17) is metallic, and
- the second sleeve (17) forms an electrically conductive connection between the housing (1) and the metallic shield (5).

7. Cable bushing according to Claim 1, in which
- the first sleeve (11) is composed of a plastic,
- the cable (3) has a coating (7) made of a plastic, and
- the first sleeve (11) is welded to the coating.

8. Cable bushing according to Claim 1, in which
- the step in the housing (1) is a radially inwardly extending shoulder (9), and
- the sealing means is a seal (15) which bears on the shoulder (9),
-- which is clamped in between the shoulder (9) and the first section (13) of the first sleeve (11).

9. Cable bushing according to Claim 1, in which
- the step in the housing (1) is a radially inwardly extending shoulder (9), and
- the sealing means is provided by means of an inner edge (25) of the shoulder (9) onto which the first section (13) of the first sleeve (11) is pressed by means of the attachment element.

## Revendications

1. Presse-étoupe pour une sonde avec
- un câble (3),
- un corps (1),
-- à travers lequel est acheminé le câble (3), et
-- qui présente en une première extrémité un épaulement s'étendant radialement vers l'intérieur,
- une première douille (11),
-- qui entoure le câble (3), et
-- qui présente une première section (13) disposée à l'intérieur du corps (1),
-- la première douille (11) étant maintenue par l'épaulement du corps,
-- la première douille (11) reposant de façon étanche contre le câble (3) et
-- un élément d'étanchéité étant présent entre l'épaulement du corps (1) et la première douille (11),
- une deuxième douille (17),
-- qui est disposée à l'intérieur du corps (1),
-- qui présenté une première section cylindrique (19), laquelle entoure étroitement le câble (3),
-- qui présente une deuxième section (21) limitrophe à une extrémité située du côté de l'épaulement de la première section (19),
--- qui repose sur la première section (13) de la première douille (11), et
- un élément de fixation,
-- qui est constitué d'une bague filetée (23) vissée en direction de l'épaulement, à l'intérieur du corps (1)
-- et à travers lequel la deuxième douille (17) est pressée contre la première douille (11).

2. Presse-étoupe selon la revendication 1, pour lequel
- l'épaulement du corps (1) présente une surface latérale (29) intérieure conique, dont le diamètre décroît en direction de la première extrémité du corps (1),
- la première douille (11) est en élastomère,
- la première section (13) de la première douille présente une zone conique (31), et
- la première douille (11) est pressée par l'élément de fixation contre l'épaulement du corps (1), de telle manière que la zone conique (31) de la première douille (11) est pressée contre la surface latérale (29) conique du corps (1) et que la première douille (11) repose de façon étanche contre le corps (1) et le câble (3).

3. Presse-étoupe selon là revendication 2, pour lequel
est bloqué par le biais de l'élément de fixation un ressort (27), qui exerce sur la première douille (11) une force en direction de l'épaulement.

4. Presse-étoupe selon la revendication 3, pour lequel le ressort repose sur la rondelle (47), laquelle repose à son tour sur la première douille (11).

5. Presse-étoupe selon la revendication 1, pour lequel la deuxième douille (17) est métallique et est pressée avec le câble (3) à des fins de soulagement de traction du câble (3).

6. Presse-étoupe selon la revendication 1, pour lequel
- le câble (3) est entouré à l'extérieur par un blindage métallique (5),
- la deuxième douille (17) est métallique, et
- la deuxième douille (17) forme une liaison électroconductrice entre le corps (1) et le blindage métallique (5).

7. Presse-étoupe selon la revendication 1, pour lequel
- la première douille (11) est en matière plastique,
- le câble (3) présente un enrobage (7) en matière plastique, et
- la première douille (11) est soudée avec l'enrobage (7).

8. Presse-étoupe selon la revendication 1, pour lequel
- l'épaulement du corps (1) est un épaulement (9) s'étendant radialement vers l'intérieur, et
- l'étanchéité est assurée par un joint (15) reposant sur l'épaulement (9),
-- lequel joint est bloqué entre l'épaulement (9) et la première section (13) de la première douille (11).

9. Presse-étoupe selon la revendication 1, pour lequel
- l'épaulement du corps (1) est un épaulement (9) s'étendant radialement vers l'intérieur, et
- l'étanchéité est assurée par un bord intérieur (25) de l'épaulement (9), contre lequel la première section (13) de la première douille (11) est pressée par le biais de l'élément de fixation.
